# EUROPEAN PATENT APPLICATION

(11) **EP 4 832 603 A1**
(43) Date of publication of application: **28.10.2026**
(21) Application number: 24906300.9
(22) Date of filing: 16.12.2024
(51) Int. Cl.: H04W 56/00

(54) **METHOD AND APPARATUS FOR DETERMINING CHANGE IN TIMING SYNCHRONIZATION STATUS, AND TERMINAL**

(30) Priority: 19.12.2023 CN 202311764419
(71) Applicant: Vivo Mobile Communication Co., Ltd., Dongguan, Guangdong 523863 (CN)
(72) Inventor: LI, Yuan, Dongguan, Guangdong 523863 (CN); ZHANG, Yanxia, Dongguan, Guangdong 523863 (CN); MO, Yitao, Dongguan, Guangdong 523863 (CN)
(74) Representative: Walaski, Jan Filip
(86) International application number: PCT/CN2024/139624
(87) International publication number: WO 2025/130819

(57) **Abstract**

The present application relates to the technical field of communications, and discloses a method and apparatus for determining a change in timing synchronization status, and a terminal. The method for determining a change in timing synchronization status in embodiments of the present application comprises: when a terminal obtains a first event identifier corresponding to a first event, the terminal determines, on the basis of whether a first storage event identifier corresponding to a second event is stored locally, whether the timing synchronization status of the terminal changes, wherein the first event and the second event are related to the timing synchronization status of the terminal.

## Description

### CROSS-REFERENCE TO RELATED APPLICATIONS

This application claims priority to Chinese Patent Application No. 202311764419.X, filed with the China National Intellectual Property Administration on December 19, 2023 and entitled "METHOD AND APPARATUS FOR DETERMINING TIMING SYNCHRONIZATION STATUS CHANGE AND TERMINAL", which is incorporated herein by reference in its entirety.

### TECHNICAL FIELD

This application belongs to the field of communication technologies, and specifically relates to a method and an apparatus for determining a timing synchronization status change, and a terminal.

### BACKGROUND

With continuous development of wireless communication technologies, a timing synchronization technology has become an important part of the wireless communication technologies. In a related technology, if a clock of a network side and a clock of a terminal are not synchronized, data packet loss and repetition may be caused, and consequently, communication quality is affected, but the timing synchronization technology can ensure that the clock of the network side is consistent with the clock of the terminal, to improve the accuracy and reliability of data transmission, thereby improving communication quality.

When different timing synchronization sources are involved or different interference is encountered, and a timing synchronization status of the network side may change, a timing synchronization status of the terminal also changes accordingly. However, in the related technology, when different timing synchronization sources are involved or different interference is encountered, the terminal still runs based on an original timing synchronization status, and consequently, a terminal having a synchronization requirement cannot keep synchronization with the network side.

### SUMMARY

Embodiments of this application provide a method and an apparatus for determining a timing synchronization status change, and a terminal, which can resolve a problem of poor timing synchronization stability between a terminal and a network side in a related technology.

According to a first aspect, a method for determining a timing synchronization status change is provided, and the method includes:
in a case that a terminal obtains a first event identifier corresponding to a first event, determining, by the terminal based on whether a first stored event identifier corresponding to a second event is stored locally, whether a timing synchronization status of the terminal has changed; where
the first event and the second event are related to the timing synchronization status of the terminal.

According to a second aspect, an apparatus for determining a timing synchronization status change is provided and applied to a terminal, and the apparatus includes:
a determining module, configured to: in a case that a first event identifier corresponding to a first event is obtained, determine, based on whether a first stored event identifier corresponding to a second event is stored locally, whether a timing synchronization status of the terminal has changed; where
the first event and the second event are related to the timing synchronization status of the terminal.

According to a third aspect, a terminal is provided, where the terminal includes a processor and a memory. The memory stores a program or instructions capable of being run on the processor, and when the program or instructions are executed by the processor, the steps of the method according to the first aspect are implemented.

According to a fourth aspect, a terminal is provided, including a processor and a communication interface, where the processor is configured to:
in a case that a first event identifier corresponding to a first event is obtained, determine, based on whether a first stored event identifier corresponding to a second event is stored locally, whether a timing synchronization status of the terminal has changed; where
the first event and the second event are related to the timing synchronization status of the terminal.

According to a fifth aspect, a readable storage medium is provided, the readable storage medium stores a program or instructions, and when the program or instructions are executed by a processor, the steps of the method according to the first aspect are implemented.

According to a sixth aspect, a chip is provided. The chip includes a processor and a communication interface. The communication interface is coupled to the processor. The processor is configured to run a program or instructions to implement the steps of the method according to the first aspect.

According to a seventh aspect, a computer program/program product is provided. The computer program/program product is stored in a storage medium, and the program/program product is executed by at least one processor to implement the steps of the method according to the first aspect.

According to an eighth aspect, an embodiment of this application provides an apparatus for determining a timing synchronization status change. The apparatus is configured to perform the steps of the method for determining a timing synchronization status change according to the first aspect.

In embodiments of this application, in a case that a terminal obtains a first event identifier corresponding to a first event, the terminal can determine, based on whether a first stored event identifier corresponding to a second event is stored locally, whether a timing synchronization status of the terminal has changed, where the first event and the second event are related to the timing synchronization status of the terminal. It may be learned that in the embodiments of this application, if the terminal obtains a first event identifier corresponding to an event related to the timing synchronization status of the terminal, the terminal may determine, based on whether a first stored event identifier corresponding to the event related to the timing synchronization status of the terminal is stored locally, whether the timing synchronization status of the terminal has changed. Therefore, the embodiments of this application provide a method for the terminal to determine whether the timing synchronization status of the terminal has changed, so that the terminal can learn and update the timing synchronization status in a timely manner, thereby ensuring the synchronization between the terminal and a network side, and improving the stability of timing synchronization.

### BRIEF DESCRIPTION OF DRAWINGS

FIG. 1 is a block diagram of a wireless communication system to which an embodiment of this application is applicable;
FIG. 2 is a flowchart of a method for determining a timing synchronization status change according to an embodiment of this application;
FIG. 3 is a flowchart of Implementation 1 of a method for determining a timing synchronization status change according to an embodiment of this application;
FIG. 4 is a flowchart of Implementation 2 of a method for determining a timing synchronization status change according to an embodiment of this application;
FIG. 5 is a structural block diagram of an apparatus for determining a timing synchronization status change according to an embodiment of this application;
FIG. 6 is a structural block diagram of a communication device according to an embodiment of this application; and
FIG. 7 is a structural block diagram of a terminal according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in an order other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as follows: A transmitter explicitly notifies, in a transmitted indication, a receiver of specific information, an operation that needs to be performed, a requested result, or other content. The indirect indication may be understood as: The receiver determines corresponding information based on the indication sent by the sender, or performs determining based on the indication sent by the transmitter, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6^{th} Generation, 6G) communication system other than the NR system.

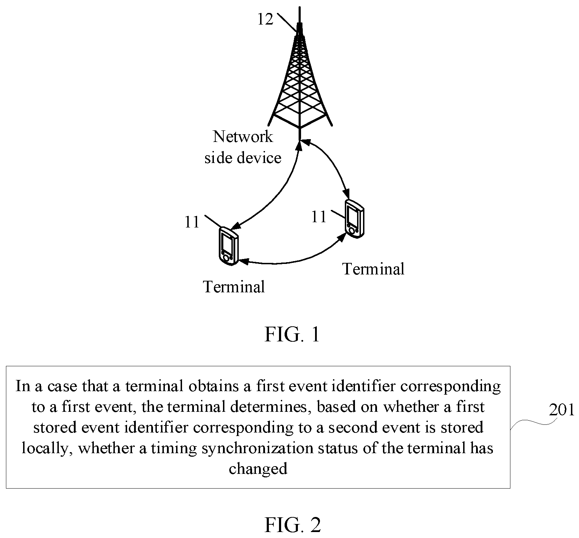

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a piece of furniture), a game console, a personal computer (Personal Computer, PC), a teller machine, a self-service machine, or another terminal-side device. The wearable device includes: a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in the embodiments of this application.

The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, and the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or another proper term in the art. The base station is not limited to a specific technical term, provided that same technical effects are achieved. It should be noted that in the embodiments of this application, only a base station in an NR system is used as an example for description, and a specific type of the base station is not limited.

For ease of understanding of a method for determining a timing synchronization status change in the embodiments of this application, the following related technologies are described:

### I. Non-public network (Non-Public Network, NPN)

A 5G NPN is a private network built using 5G technologies and independent of a public land mobile network (Public Land Mobile Network, PLMN) serving the general public. The 5G NPN supports two deployment modes: stand-alone NTN deployment (Stand-alone Non-Public Network, SNPN) and public network integrated deployment (Public Network Integrated Non-Public Network, PNI-NPN). The stand-alone NTN deployment does not rely on any network function of the PLMN for implementation. The public network integrated deployment relies on implementation of a public network.

In the 3GPP Release 16 (R16) specification, an NPN adopts public network integrated deployment. One currently available approach is to treat the NPN as one or a group of slices/data network names (Data Network Name, DNN) of the public network. In view of the fact that a 5G core network (5GC) slice cannot restrict UE access on a radio access network (Radio Access Network, RAN) side, a closed access group (Closed Access Group, CAG) allowing access to the NPN needs to be defined for the NPN.

The CAG includes a group of cell IDs, and the UE can access an NPN RAN only in an area corresponding to the CAG. The RAN broadcasts PLMN + CAG ID, and performs access selection and control based on the CAG. CAG information is generally pre-configured in the UE and may be updated by using a user configuration update (User Configuration Update, UCU) procedure.

R17 introduces stand-alone deployment of NPNs, which are identified using a combination of a PLMN ID and a network identifier (Network identifier, NID). A PLMN operator may reuse its PLMN ID while distinguishing different private networks using NIDs, or may use a PLMN ID reserved for the private network. The RAN broadcasts PLMN + NID. UE for an SNPN (that is, stand-alone NPN deployment) is identified using a subscription permanent identifier (Subscription Permanent Identifier, SUPI). If the UE is set to an SNPN access mode, the UE can access and register with an SNPN only through a Uu interface. During initial registration of the UE, the UE carries the PLMN ID and the NID, and a 5G radio access network (NG-RAN) conveys the information to an access and mobility management function (Access and Mobility Management Function, AMF). Subscription information of a user in an NPN includes unified access control (Unified Access Control, UAC) information. During network congestion, the SNPN can prevent the UE from access.

### II. R18 time-sensitive communication (timing sensitive communications, TSC) enhancement

To support a communication service having highly reliable synchronized communication, UE in different radio resource control (Radio Resource Control, RRC) states may obtain a timing synchronization status (timing synchronization status) or specific clock quality information (clock quality information) in either of the following manner 1 or manner 2.

Manner 1: For UE in a connected state (RRC_CONNECTED), a base station (gNB) sends, by using dedicated RRC signaling such as downlink information transfer (DLInformationTransfer), an event identifier (Event ID) corresponding to a timing synchronization status change event and clock quality information.

Manner 2: For UE that is not in an RRC_CONNECTED state (that is, UE in an RRC_inactive state (RRC_INACTIVE) or RRC_idle state (RRC_IDLE)), the UE first needs to set up or resume an RRC connection, to obtain clock quality information from a gNB by using dedicated RRC signaling. The gNB broadcasts the Event ID in a SIB 9 to indicate its timing synchronization status, and the gNB uses a change in the Event ID as a trigger condition for triggering a system information change to indicate the UE to read SIB information, thereby informing the UE that new timing synchronization status information is available (or exists).

An action range of the Event ID is the gNB. In other words, a change in a gNB ID may also be used as one of conditions for the UE to consider that a time synchronization status has changed and therefore set up or resume an RRC connection. However, the gNB itself does not broadcast the gNB ID, but the UE may obtain, by using cell identity information (CellIdentity, that is, NR Cell Identifier, NCI) and a gNB identifier length (gNB-ID-Length) in a SIB 1, a gNB ID corresponding to a current cell.

### III. RAN cell access-related Information

A first system information block SIB 1 includes cell access-related information, and includes different types of networks supported by a cell, and may include a PLMN ID information list and an NPN ID information list.

### IV. Base station/cell identifier distinction

A global base station identifier (Global gNB ID) is used for globally identifying a gNB. The Global gNB ID includes identity information (Identity) of a PLMN to which the gNB belongs and a gNB ID.

An NR cell global identity information (NR Cell Global Identifier, NCGI) is used for globally identifying an NR cell. The NCGI includes an identity of a PLMN to which the cell belongs and NR cell identity information NCI of the cell. The PLMN identity included in the NCGI is a 1^{st} PLMN Identity, in a broadcasting sequence, in a PLMN ID list associated with cell identity information (CellIdentity) (which is used to uniquely identify a cell within a PLMN/SNPN) in a SIB 1.

A method for determining a timing synchronization status change provided in the embodiments of this application is described in detail below with reference to the accompanying drawings by using some embodiments and application scenarios.

An embodiment of this application provides a method for determining a timing synchronization status change. As shown in FIG. 2, the method may include the following step 201.

Step 201: In a case that a terminal obtains a first event identifier corresponding to a first event, the terminal determines, based on whether a first stored event identifier corresponding to a second event is stored locally, whether a timing synchronization status of the terminal has changed.

The first event and the second event are related to the timing synchronization status of the terminal. In other words, the first event and the second event are separately used to indicate one timing synchronization status of the terminal, or this may be understood as that both the first event and the second event correspond to a 5G access stratum time distribution parameter in "clock quality report control information" from a core network device, so that the terminal can obtain timing synchronization status information of the terminal.

In addition, if a base station on which the terminal camps supports timing synchronization, the base station may provide the timing synchronization status by periodically broadcasting an event identifier (Event ID).

It may be learned that when the terminal obtains an Event ID, if the terminal does not store the Event ID locally, it indicates that a base station on which the terminal previously camps does not support timing synchronization or does not provide a timing synchronization status, but now supports timing synchronization or provides a timing synchronization status. Therefore, when receiving an Event ID, the terminal may determine, based on whether the Event ID is stored locally, whether the timing synchronization status of the terminal has changed.

Optionally, that the terminal obtains the first event identifier includes:
the terminal obtains the first event identifier from a ninth system information block SIB 9.

It may be learned that if the base station on which the terminal camps supports timing synchronization, the base station may provide the timing synchronization status by periodically broadcasting an event identifier (Event ID) in the SIB 9. In this way, the terminal can obtain the Event ID from the received SIB 9 by receiving the SIB 9.

It may be learned from the foregoing step 201 that, in this embodiment of this application, in a case that the terminal obtains the first event identifier corresponding to the first event, the terminal can determine, based on whether the first stored event identifier corresponding to the second event is stored locally, whether the timing synchronization status of the terminal has changed. The first event and the second event are related to the timing synchronization status of the terminal. It may be learned that in this embodiment of this application, if the terminal obtains a first event identifier corresponding to an event related to the timing synchronization status of the terminal, the terminal may determine, based on whether a first stored event identifier corresponding to the event related to the timing synchronization status of the terminal is stored locally, whether the timing synchronization status of the terminal has changed. Therefore, an embodiment of this application provides a method for the terminal to determine whether the timing synchronization status of the terminal has changed, so that the terminal can learn and update the timing synchronization status in a timely manner, thereby ensuring the synchronization between the terminal and a network side, and improving the stability of timing synchronization. Optionally, in the foregoing step 201, that the terminal determines, based on whether the first stored event identifier corresponding to the second event is stored locally, whether the timing synchronization status of the terminal has changed includes the following steps A-1 and A-2.

Step A-1: In a case that the first stored event identifier is not stored locally, the terminal determines that the timing synchronization status of the terminal has changed.

Step A-2: In a case that the first stored event identifier is stored locally, the terminal determines, based on the first event identifier and the first stored event identifier, whether the timing synchronization status of the terminal has changed.

As described above, when the terminal obtains an Event ID, if the terminal does not store the Event ID locally, it indicates that a base station on which the terminal previously camps does not support timing synchronization or does not provide a timing synchronization status, but now supports timing synchronization or provides a timing synchronization status. Therefore, in step A-1, if the terminal does not store the first stored event identifier locally, it indicates that the timing synchronization status of the terminal has changed.

In addition, one Event ID is used to indicate one timing synchronization status of the terminal, that is, different Event IDs are used to indicate different timing synchronization statuses of the terminal. In other words, in a time period, if a timing synchronization status corresponding to a base station on which the terminal camps remains unchanged, the base station broadcasts a same Event ID in N cycles in the time period; and if the timing synchronization status corresponding to the base station has changed, the base station broadcasts different Event IDs in the time period. Therefore, in step A-2, if the terminal stores the first stored event identifier locally, the terminal may determine, by comparing the first event identifier with the first stored event identifier, whether the timing synchronization status of the terminal has changed.

Optionally, in the foregoing step A-2, that the terminal determines, based on the first event identifier and the first stored event identifier, whether the timing synchronization status of the terminal has changed includes the following steps B-1 and B-2.

Step B-1: In a case that the first event identifier is different from the first stored event identifier, the terminal determines that the timing synchronization status of the terminal has changed.

Step B-2: In a case that the first event identifier is the same as the first stored event identifier, the terminal determines, based on identity information of a base station on which the terminal currently camps and identity information of a camped-on base station that is stored locally by the terminal, whether the timing synchronization status of the terminal has changed.

As described above, if the base station on which a terminal camps supports timing synchronization, the base station may periodically broadcast an event identifier (Event ID) to notify its timing synchronization status. In addition, if the timing synchronization status of the base station has changed, the Event ID broadcast by the base station has changed. In addition, if the timing synchronization status of the base station has changed, the timing synchronization status of the terminal has changed accordingly. Therefore, in step B-1, if a first event identifier currently obtained by the terminal is different from the first stored event identifier stored locally by the terminal, it indicates that the timing synchronization status of the terminal has changed.

In addition, it should be noted that an action range of the Event ID is one base station. In other words, when the base station on which the terminal camps has changed, and both a base station on which the terminal camps before the change and a base station on which the terminal camps after the change support timing synchronization, even though the terminal may receive a same Event ID before and after the change, if the base station on which the terminal camps has changed, the timing synchronization status of the terminal has changed. Therefore, in step B-2, if a first event identifier currently obtained by the terminal is the same as the first stored event identifier stored locally by the terminal, the terminal needs to further compare the identity information of the base station on which the terminal currently camps with the identity information of the camped-on base station that is stored locally by the terminal, to determine whether the timing synchronization status of the terminal has changed.

Optionally, the identity information of the base station on which the terminal currently camps includes a first base station identifier, the identity information of the camped-on base station that is stored locally by the terminal includes a first stored base station identifier, and both the first base station identifier and the first stored base station identifier are global base station identifiers.

In the foregoing step B-2, that the terminal determines, based on the identity information of the base station on which the terminal currently camps and the identity information of the camped-on base station that is stored locally by the terminal, whether the timing synchronization status of the terminal has changed includes the following steps C-1 and C-2.

Step C-1: In a case that the first base station identifier is the same as the first stored base station identifier, the terminal determines that the timing synchronization status of the terminal remains unchanged.

Step C-2: In a case that the first base station identifier is different from the first stored base station identifier, the terminal determines that the timing synchronization status of the terminal has changed.

When the base station on which the terminal camps has changed, the terminal considers that the timing synchronization status has changed. A gNB ID is valid in a PLMN. In other words, different gNBs in different PLMNs may be allocated with a same gNB ID. In this case, although the gNB ID remains unchanged, an actual gNB has changed. Therefore, UE cannot learn, by merely comparing gNB IDs, whether a gNB on which the terminal camps has changed, and therefore cannot determine, in a timely manner, whether a timing synchronization status has changed.

The global base station identifier globally identifies a base station; in other words, a global base station identifier of each base station is different. Therefore, in the foregoing steps C-1 and C-2, through comparison between a global base station identifier (that is, the first base station identifier) of the base station on which the terminal currently camps and a global base station identifier (that is, the first stored base station identifier) of the camped-on base station that is stored locally by the terminal, it can be accurately determined whether the base station on which the terminal camps has changed, and further, it can be accurately determined whether the timing synchronization status of the terminal has changed.

Optionally, the first stored event identifier is stored in a first local variable, and the first stored base station identifier is stored in a second local variable. The method further includes one of the following D-1 to D-3:

D-1: In a case that the first stored event identifier is not stored locally (that is, in a case that the first local variable does not store content), the terminal uses the first event identifier as a second stored event identifier, updates storage content of the first local variable to the second stored event identifier (that is, stores the second stored event identifier as the storage content of the first local variable, that is, updates the storage content of the first local variable to the first event identifier), uses the first base station identifier as a second stored base station identifier, and updates storage content of the second local variable to the second stored base station identifier (that is, stores the second stored base station identifier as the storage content of the second local variable or replaces the storage content of the second local variable with the second stored base station identifier, that is, updates the storage content of the second local variable to the first event identifier).

It may be understood that the first local variable is used to store an event identifier related to the timing synchronization status of the terminal, that is, the first local variable is used to store an event identifier used to indicate the timing synchronization status of the terminal, and the second local variable is used to store a global base station identifier of the base station on which the terminal camps.

In addition, as described above, if the terminal does not store the first stored event identifier locally, it indicates that the base station on which the terminal previously camps does not support timing synchronization or does not provide a timing synchronization status, but now supports timing synchronization or provides a timing synchronization status (that is, the timing synchronization status of the terminal has changed). Therefore, in D-1, if the first local variable locally in the terminal does not store content, the first local variable and the second local variable need to be updated.

D-2: In a case that the first event identifier is different from the first stored event identifier, the terminal uses the first event identifier as a third stored event identifier, updates storage content of the first local variable to the third stored event identifier (that is, stores the third stored event identifier as the storage content of the first local variable, that is, updates the storage content of the first local variable to the first event identifier), uses the first base station identifier as a third stored base station identifier, and updates storage content of the second local variable to the third stored base station identifier (that is, replaces the storage content of the second local variable with the third stored base station identifier, that is, updates the storage content of the second local variable to the first base station identifier).

It should be noted that, if the first event identifier is different from the first stored event identifier, it cannot directly prove whether the base station on which the terminal camps has changed. To make storage content of a local variable correspond to a camped-on cell, the terminal further needs to update the second local variable in addition to updating the first local variable. Therefore, in D-2, if the first event identifier is different from the first stored event identifier, the first local variable and the second local variable need to be updated.

D-3: In a case that the first base station identifier is different from the first stored base station identifier, the terminal uses the first base station identifier as a fourth stored base station identifier, and updates storage content of the second local variable to the fourth stored base station identifier (that is, replaces the storage content of the second local variable with the fourth stored base station identifier, that is, updates the storage content of the second local variable to the first base station identifier).

It should be noted that, the first base station identifier being different from the first stored base station identifier is caused by a change in the base station on which the terminal camps. Therefore, in D-3, if the first base station identifier is different from the first stored base station identifier, the second local variable needs to be updated.

Optionally, the identity information of the base station on which the terminal currently camps includes a first local base station identifier and a first network identifier, and the identity information of the camped-on base station that is stored locally by the terminal includes a first stored local base station identifier and a first stored network identifier.

In the foregoing step B-2, that the terminal determines, based on the identity information of the base station on which the terminal currently camps and the identity information of the camped-on base station that is stored locally by the terminal, whether the timing synchronization status of the terminal has changed includes the following steps E-1 and E-2.

Step E-1: In a case that the first local base station identifier is the same as the first stored local base station identifier, and the first network identifier is the same as the first stored network identifier, the terminal determines that the timing synchronization status of the terminal remains unchanged.

Step E-2: In a case that the first local base station identifier is different from the first stored local base station identifier, or the first network identifier is different from the first stored network identifier, the terminal determines that the timing synchronization status of the terminal has changed.

When the base station on which the terminal camps has changed, the terminal considers that the timing synchronization status has changed. A gNB ID is valid in a PLMN. In other words, different gNBs in different PLMNs may be allocated with a same gNB ID. In this case, although the gNB ID remains unchanged, an actual gNB has changed. Therefore, UE cannot learn, by merely comparing gNB IDs, whether a gNB on which the terminal camps has changed, and therefore cannot determine, in a timely manner, whether a timing synchronization status has changed.

The global base station identifier globally identifies a base station; in other words, a global base station identifier of each base station is different. The global base station identifier includes the network identifier and the local base station identifier . Therefore, in the foregoing steps D-1 and D-2, through comparison between the network identifier (that is, the first network identifier) of the base station on which the terminal currently camps the local base station identifier (that is, the first local base station identifier), and comparison between the network identifier (that is, the first stored network identifier) of the camped-on base station that is stored locally by the terminal and the local base station identifier (that is, the first stored local base station identifier), it can be accurately determined whether the base station on which the terminal camps has changed, and further, it can be accurately determined whether the timing synchronization status of the terminal has changed.

It should be noted that in this specification, a sequence of a process of comparing the first network identifier with the first stored network identifier and a process of comparing the first local base station identifier with the first stored local base station identifier are not specifically limited.

Optionally, the first stored local base station identifier is stored in a third local variable, and the first stored network identifier is stored in a fourth local variable. The method further includes one of the following F-1 to F-4.

F-1: In a case that the first stored event identifier is not stored locally (that is, in a case that the first local variable does not store content), the terminal uses the first event identifier as a second stored event identifier, updates storage content of the first local variable to the second stored event identifier (that is, stores the second stored event identifier as the storage content of the first local variable, that is, updates the storage content of the first local variable to the first event identifier), uses the first local base station identifier as a second stored local base station identifier, updates storage content of the third local variable to the second stored local base station identifier (that is, stores the second stored local base station identifier as the storage content of the third local variable or replaces the storage content of the third local variable to the second stored local base station identifier, that is, updates the storage content of the third local variable to the first local base station identifier), uses the first network identifier as a second stored network identifier, and updates storage content of the fourth local variable to the second stored network identifier (that is, stores the second stored network identifier as the storage content of the fourth local variable or replaces the storage content of the fourth local variable with the second stored network identifier, that is, updates the storage content of the fourth local variable to the first network identifier).

It may be understood that the first local variable is used to store an event identifier related to the timing synchronization status of the terminal, that is, the first local variable is used to store an event identifier used to indicate the timing synchronization status of the terminal; the third local variable is used to store a local base station identifier of the base station on which the terminal camps; and the fourth local variable is used to store a network identifier of the base station on which the terminal camps.

In addition, as described above, if the terminal does not store the first stored event identifier locally, it indicates that the base station on which the terminal previously camps does not support timing synchronization or does not provide a timing synchronization status, but now supports timing synchronization or provides a timing synchronization status (that is, the timing synchronization status of the terminal has changed). Therefore, in F-1, if the first local variable locally in the terminal does not store content, the first local variable, the third local variable, and the fourth local variable need to be updated.

F-2: In a case that the first event identifier is different from the first stored event identifier, the terminal uses the first event identifier as a third stored event identifier, updates storage content of the first local variable to the third stored event identifier (that is, stores the third stored event identifier as the storage content of the first local variable, that is, updates the storage content of the first local variable to the first event identifier), uses the first local base station identifier as a third stored local base station identifier, updates storage content of the third local variable to the third stored local base station identifier (that is, replaces the storage content of the third local variable with the third stored local base station identifier, that is, updates the storage content of the third local variable to the first local base station identifier), uses the first network identifier as a third stored network identifier, and updates storage content of the fourth local variable to the third stored network identifier (that is, replaces the storage content of the fourth local variable with the third stored network identifier, that is, updates the storage content of the fourth local variable to the first network identifier).

It should be noted that, if the first event identifier is different from the first stored event identifier, it cannot directly prove whether the base station on which the terminal camps has changed. To make storage content of a local variable correspond to a camped-on cell, the terminal further needs to update the third local variable and the fourth local variable in addition to updating the first local variable. Therefore, in F-2, if the first event identifier is different from the first stored event identifier, the first local variable, the third local variable, and the fourth local variable need to be updated.

F-3: In a case that the first local base station identifier is different from the first stored local base station identifier, the terminal uses the first local base station identifier as a fourth stored local base station identifier, and updates storage content of the third local variable to the fourth stored local base station identifier (that is, replaces the storage content of the third local variable with the fourth stored local base station identifier, that is, updates the storage content of the third local variable to the first local base station identifier).

It should be noted that, the first local base station identifier being different from the first stored local base station identifier is caused by a change in the base station on which the terminal camps. Therefore, in F-3, if the first local base station identifier is different from the first stored local base station identifier, the third local variable needs to be updated.

F-4: In a case that the first network identifier is different from the first stored network identifier, the terminal uses the first network identifier as a fourth stored network identifier, and updates storage content of the fourth local variable to the fourth stored network identifier (that is, replaces the storage content of the fourth local variable with the fourth stored network identifier, that is, updates the storage content of the fourth local variable to the first network identifier).

It should be noted that, that the first network identifier being different from the first stored network identifier is caused by a change in a network of the base station on which the terminal camps. Therefore, in F-4, if the first network identifier is different from the first stored network identifier, the fourth local variable needs to be updated.

Optionally, the identity information of the base station on which the terminal currently camps is determined based on target network identity information, and the target network identity information is determined based on a situation of support, by a network on which the terminal camps, for a public land mobile network PLMN and a non-public network NPN.

The target identity information is included in a SIB 1. In other words, which specific information in the SIB 1 is included in the target identity information may be determined based on the situation of support, by the network on which the terminal camps, for the PLMN and the NPN.

Optionally, the target network identity information meets one of the following G-1 to G-3:
G-1: In a case that the network on which the terminal camps supports only the PLMN, the target network identity information includes a first object in a PLMN identity information list (PLMN-IdentityInfoList) in a first system information block SIB 1, and the first object is a 1^{st} piece of PLMN identity information (PLMN-IdentityInfo) that follows a broadcasting sequence in the PLMN identity information list.

It may be learned from G-1 that, in a case that the network on which the terminal camps supports only the PLMN, the target network identity information includes the 1^{st} piece of PLMN-IdentityInfo (that is, a 1^{st} piece of PLMN-IdentityInfo that is broadcast) that follows the broadcasting sequence in the PLMN-IdentityInfoList in the SIB 1.

G-2: In a case that the network on which the terminal camps supports sharing between the PLMN and the NPN, the target network identity information includes the first object in the PLMN identity information list in the SIB 1.

It may be learned from G-2 that, in a case that the network on which the terminal camps supports sharing between the PLMN and the NPN, the target network identity information includes the 1^{st} piece of PLMN-IdentityInfo (that is, a 1^{st} piece of PLMN-IdentityInfo that is broadcast) that follows the broadcasting sequence in the PLMN-IdentityInfoList in the SIB 1.

G-3: In a case that the network on which the terminal camps supports the NPN, the target network identity information includes a second object in an NPN identity information list (NPN-IdentityInfoList) in the SIB 1, and the second object is a 1^{st} piece of NPN identity information (NPN-IdentityInfo) that follows a broadcasting sequence in the NPN identity information list.

It may be learned from G-3 that, in a case that the network on which the terminal camps supports the NPN, the target network identity information includes the 1^{st} piece of NPN-IdentityInfo (that is, a 1^{st} piece of NPN-IdentityInfo that is broadcast) that follows the broadcasting sequence in the NPN-IdentityInfoList in the SIB 1.

It should be noted that the SIB 1 includes cell access-related information. The cell access-related information includes PLMN-IdentityInfoList and NPN-IdentityInfoList, PLMN-IdentityInfoList includes a plurality of pieces of PLMN-IdentityInfo, and NPN-IdentityInfoList includes a plurality of pieces of NPN-IdentityInfo.

Optionally, the identity information of the base station on which the terminal currently camps includes a first base station identifier, and the first base station identifier is determined based on the first network identifier and the first local base station identifier; or the identity information of the base station on which the terminal currently camps includes the first network identifier and the first local base station identifier.

The first network identifier and the first local base station identifier meet any one of the following H-1 to H-3:
H-1: In a case that the network on which the terminal camps supports only the PLMN, the first network identifier is a 1^{st} PLMN identifier in the first object, and the first local base station identifier is determined based on the first object.
H-2: In a case that the network on which the terminal camps supports sharing between the PLMN and the non-public network NPN, the first network identifier is a 1^{st} PLMN identifier in the first object, and the first local base station identifier is determined based on the first object.
H-3: In a case that the network on which the terminal camps supports the NPN, the first network identifier is a PLMN identifier included in a 1^{st} NPN identifier in the second object, and the first local base station identifier is determined based on the second object.

As described above, the identity information of the base station on which the terminal currently camps includes the first base station identifier (which is a global base station identifier), or may include the first network identifier and the first local base station identifier.

When the identity information of the base station on which the terminal currently camps includes the first base station identifier, the first base station identifier is determined based on the first network identifier and the first local base station identifier, for example, one first network identifier and one first local base station identifier are combined to obtain one first base station identifier.

In addition, as described above, the identity information of the base station on which the terminal currently camps is determined based on the target network identity information. Therefore, the first network identifier and the first local base station identifier are determined based on the target network information.

Specifically, it may be learned from the foregoing G-1 and H-1 that, in a case that the network on which the terminal camps supports only the PLMN, the first network identifier is the 1^{st} PLMN identifier (PLMN-identity) in a 1^{st} piece of PLMN-IdentityInfo that follows the broadcasting sequence in the PLMN-IdentityInfoList in the SIB 1, and the first local base station identifier is determined based on the 1^{st} piece of PLMN-IdentityInfo that follows the broadcasting sequence in the PLMN-IdentityInfoList in the SIB 1.

It may be learned from the foregoing G-2 and H-2 that, in a case that the network on which the terminal camps supports sharing between the PLMN the NPN, the first network identifier is the 1^{st} PLMN identifier (PLMN-identity) in the 1^{st} piece of PLMN-IdentityInfo that follows the broadcasting sequence in the PLMN-IdentityInfoList in SIB 1, and the first local base station identifier is determined based on the 1^{st} piece of PLMN-IdentityInfo that follows the broadcasting sequence in the PLMN-IdentityInfoList in SIB 1.

It may be learned from the foregoing G-3 and H-3 that, in a case that the network on which the terminal camps supports the NPN, the first network identifier is the PLMN identifier (PLMN-Identity) included in the 1^{st} NPN identifier (NPN-Identity) in the 1^{st} piece of NPN-IdentityInfo that follows the broadcasting sequence in the NPN-IdentityInfoList in the SIB 1, and the first local base station identifier is determined based on the 1^{st} piece of PLMN-IdentityInfo that follows the broadcasting sequence in the PLMN-IdentityInfoList in the SIB 1.

In addition, if the target network identity information (for example, the PLMN-IdentityInfo in G-1 or G-2, or the NPN-IdentityInfo in G-3) includes cell identity information (CellIdentity) and a base station identifier length (Gnb-ID-length), the determining the first local base station identifier based on the target network identity information may include:
determining the first local base station identifier based on CellIdentity and Gnb-ID-length in the target network identity information.

A specific implementation in which the first local base station identifier is determined based on the target network identity information may be, for example, as follows:
Optionally, high X bits of the CellIdentity may be used as the first local base station identifier, where X is equal to Gnb-ID-length. For example, if the CellIdentity includes 32 bits, and Gnb-ID-length is 22 bits, high 22 bits of the CellIdentity are the first local base station identifier.

Optionally, the method further includes:
in a case that it is determined that the timing synchronization status of the terminal has changed, notifying, by an access stratum of the terminal, a non-access stratum that target information has changed; where
the target information includes at least one of clock quality information and timing synchronization status information.

It may be learned that if the timing synchronization status of the terminal has changed, the access stratum (Access Stratum, AS) of the terminal may notify the non-access stratum (Non-access Stratum, NAS) that at least one of the clock quality information and the timing synchronization status information has changed.

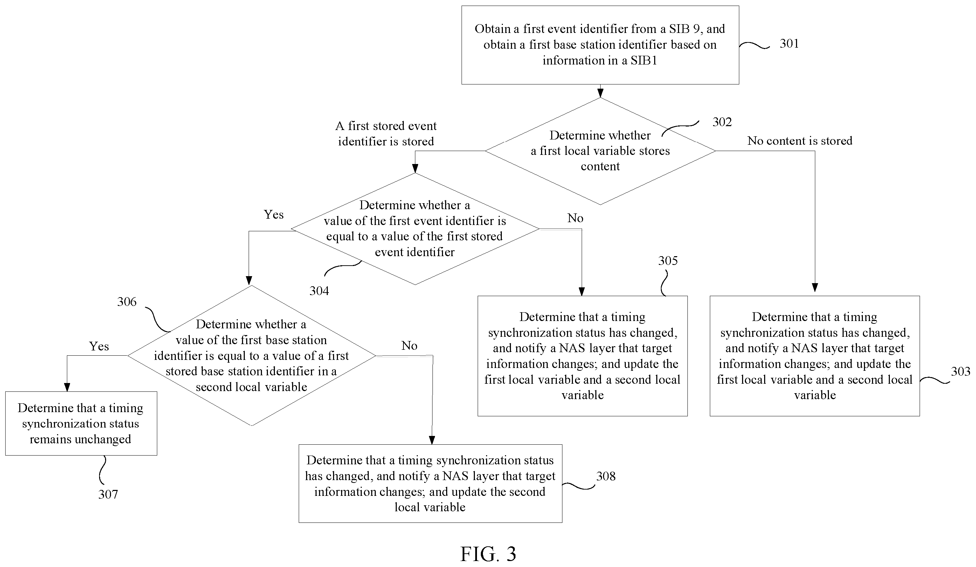

In conclusion, specific implementations of the method for determining a timing synchronization status change in the embodiments of this application may be the following Implementation 1 or Implementation 2:
Implementation 1: UE maintains two local variables, which respectively correspond to an event identifier and a global base station identifier. To be specific, a first local variable is used to store an identifier of an event related to a timing synchronization status of the UE, and a second local variable is used to store a global base station identifier of a base station on which the UE camps. As shown in FIG. 3, a specific execution process of the UE is as follows:
Step 301: Obtain a first event identifier from a SIB 9, and determine, based on information obtained from a SIB 1, a first base station identifier of a base station on which a terminal currently camps, where the first base station identifier is a global base station identifier.

It may be understood that an execution sequence of a process of obtaining the first event identifier from the SIB 9 and a process of determining, based on the information obtained from the SIB 1, the first base station identifier of the base station on which the terminal currently camps is not specifically limited herein.

An AS layer of the UE performs the following steps:
Step 302: Determine whether a first local variable stores content, if the first local variable does not store content (that is, a coverage range of a base station in which the UE is located previously does not support/does not provide a time synchronization status, but now supports/provides the time synchronization status), perform step 303; and if the first local variable stores a first stored event identifier, perform step 304.
Step 303: Determine that a timing synchronization status has changed, and notify a NAS layer that target information has changed; update the first local variable and a second local variable (that is, use the first event identifier as a second stored event identifier, and store the second stored event identifier as storage content of the first local variable; and use the first base station identifier as a second stored base station identifier, store the second stored base station identifier as storage content of the second local variable, or replace the storage content of the second local variable with the second stored base station identifier), where the target information may include at least one of content of clock quality details and timing synchronization status information.
Step 304: Determine whether a value of the first event identifier is equal to a value of the first stored event identifier; if the value of the first event identifier is not equal to the value of the first stored event identifier, perform step 305; and if the value of the first event identifier is equal to the value of the first stored event identifier, perform step 306.
Step 305: Determine that a timing synchronization status has changed, and notify a NAS layer that target information has changed; and update the first local variable and a second local variable (that is, use the first event identifier as a third stored event identifier, and replace storage content of the first local variable with the third stored event identifier; and use the first base station identifier as a third stored base station identifier, and replace storage content of the second local variable with the third stored base station identifier).
Step 306: Determine whether a value of the first base station identifier is equal to a value of the first stored base station identifier stored in the second local variable; if the value of the first base station identifier is equal to the value of the first stored base station identifier, perform step 307; and if the value of the first base station identifier is not equal to the value of the first stored base station identifier, perform step 308.
Step 307: Determine that a timing synchronization status remains unchanged.
Step 308: Determine that a timing synchronization status has changed, and notify a NAS layer that target information has changed; and update a second local variable (that is, use the first base station identifier as a fourth stored base station identifier, and replace storage content of the second local variable with the fourth stored base station identifier).

The UE determines the first base station identifier based on the first network identifier and the first local base station identifier. For example, one first network identifier and one first local base station identifier are combined to obtain one first base station identifier. The first network identifier and the first local base station identifier are determined based on information in the SIB 1.

In addition, the first network identifier meets one of the following:
when a network supports only a PLMN or supports sharing between a PLMN and an NPN, the first network identifier is a 1^{st} PLMN identifier (PLMN-identity) in a 1^{st} piece of PLMN identity information (PLMN-IdentityInfo) that follows a broadcasting sequence in a PLMN identity information list (PLMN-IdentityInfoList) in the SIB 1; and
when the network supports only the NPN, the first network identifier is a PLMN identifier (PLMN-Identity) included in a 1^{st} NPN identifier (NPN-Identity) that follows a broadcasting sequence in an NPN identity information list (NPN-IdentityInfoList) in the SIB 1.

Correspondingly, the first local base station identifier is determined based on the target identity information. For example, high X bits of cell identity information (CellIdentity) in the target identity information is used as the first local base station identity, where X is a Gnb-ID-length in the target identity information. The target identity information meets one of the following:
when the network supports only the PLMN or the network supports sharing between the PLMN and the NPN, the target identity information is a 1^{st} piece of PLMN identity information (PLMN-IdentityInfo) that follows a broadcasting sequence in a PLMN identity information list (PLMN-IdentityInfoList) in the SIB 1; and
when the network supports only the NPN, the target identity information is a 1^{st} piece of NPN identity information (NPN-IdentityInfo) that follows a broadcasting sequence in an NPN identity information list (NPN-IdentityInfoList) in the SIB 1.

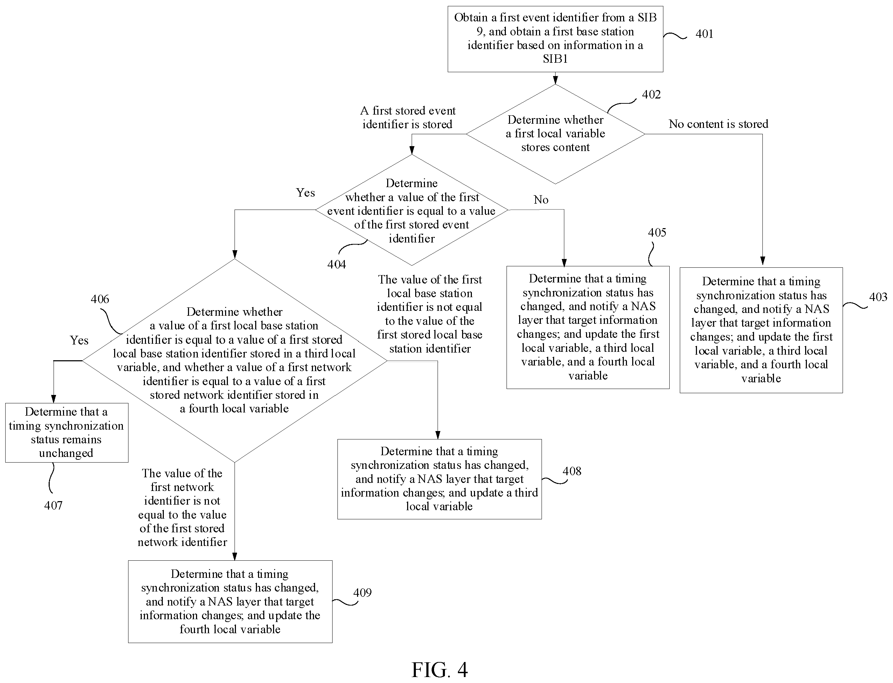

Implementation 2: UE maintains three local variables, which respectively correspond to an event identifier, a local base station identifier, and a network identifier. To be specific, a first local variable is used to store an identifier of an event related to a timing synchronization status of the UE, a third local variable is used to store a local base station identifier of a base station on which the UE camps, and a fourth local variable is used to store a network identifier of the base station on which the UE camps. As shown in FIG. 4, a specific execution process of the UE is as follows:
Step 401: Obtain a first event identifier from a SIB 9, and determine, based on information obtained from a SIB 1, a first local base station identifier of a base station on which a terminal currently camps and a first network identifier, where the first base station identifier is a global base station identifier.

It may be understood that an execution sequence of a process of obtaining the first event identifier from the SIB 9 and a process of determining, based on the information obtained from the SIB 1, the first local base station identifier of the base station on which the terminal currently camps and the first network identifier is not specifically limited herein.

It should be noted that if the base station broadcasts an event ID in the SIB 9, the base station definitely includes gNB-ID-Length in the SIB 1. In other words, from a perspective of a terminal, if the terminal receives an event identifier in the SIB 9, the terminal may certainly obtain a local base station identifier by using (Cell identity and gNB-ID-Length included in) the SIB 1.

An AS layer of the UE performs the following steps:
Step 402: Determine whether a first local variable stores content; if the first local variable does not store content (that is, a coverage range of a base station in which the UE is located previously does not support/does not provide a time synchronization status, but now supports/provides the time synchronization status), perform step 403; and if the first local variable stores a first stored event identifier, perform step 404.
Step 403: Determine that a timing synchronization status has changed, and notify a NAS layer that target information has changed; and update the first local variable, a third local variable, and a fourth local variable (that is, use the first event identifier as a second stored event identifier, and store the second stored event identifier as storage content of the first local variable; use the first local base station identifier as a second stored local base station identifier, and store the second stored local base station identifier as storage content of the third local variable, or replace storage content of the third local variable with the second stored local base station identifier; and use the first network identifier as a second stored network identifier, and store the second stored network identifier as storage content of the fourth local variable, or replace storage content of the fourth local variable with the second stored network identifier); where the target information may include at least one of content of clock quality details and timing synchronization status information.
Step 404: Determine whether a value of the first event identifier is equal to a value of the first stored event identifier; if the value of the first event identifier is not equal to the value of the first stored event identifier, perform step 405; and if the value of the first event identifier is equal to the value of the first stored event identifier, perform step 406.
Step 405: Determine that a timing synchronization status has changed, and notify a NAS layer that the target information has changed; and update the first local variable, a third local variable, and a fourth local variable (that is, use the first event identifier as a third stored event identifier, and replace storage content of the first local variable with the third stored event identifier; use the first local base station identifier as a third stored local base station identifier, replace storage content of the third local variable with the third stored local base station identifier, use the first network identifier as a third stored network identifier, and replace storage content of the fourth local variable with the third stored network identifier).
Step 406: Determine whether a value of the first local base station identifier is equal to a value of a first stored local base station identifier stored in a third local variable, and whether a value of the first network identifier is equal to a value of a first stored network identifier stored in a fourth local variable; if the value of the first local base station identifier is equal to the value of the first local storage base station identifier, and the value of the first network identifier is equal to the value of the first stored network identifier, perform step 407; if the value of the first local base station identifier is not equal to the value of the first stored local base station identifier, perform step 408; and if the value of the first network identifier is not equal to the value of the first stored network identifier, perform step 409.
Step 407: Determine that a timing synchronization status remains unchanged.
Step 408: Determine that a timing synchronization status has changed, and notify a NAS layer that target information has changed; and updates a third local variable (that is, use the first local base station identifier as a fourth stored local base station identifier, and replace storage content of the third local variable with the fourth stored local base station identifier).
Step 409: Determine that the timing synchronization status has changed, and notify a NAS layer that target information has changed; and update a fourth local variable (that is, use the first network identifier as a fourth stored network identifier, and replace storage content of the fourth local variable with the fourth stored network identifier).

The first network identifier meets one of the following:
when a network supports only a PLMN or supports sharing between a PLMN and an NPN, the first network identifier is a 1^{st} PLMN identifier (PLMN-identity) in a 1^{st} piece of PLMN identity information (PLMN-IdentityInfo) that follows a broadcasting sequence in a PLMN identity information list (PLMN-IdentityInfoList) in the SIB 1; and
when the network supports only the NPN, the first network identifier is a PLMN identifier (PLMN-Identity) included in a 1^{st} NPN identifier (NPN-Identity) that follows a broadcasting sequence in an NPN identity information list (NPN-IdentityInfoList) in the SIB 1.

Correspondingly, the first local base station identifier is determined based on the target identity information. For example, high X bits of cell identity information (CellIdentity) in the target identity information is used as the first local base station identity, where X is a Gnb-ID-length in the target identity information. The target identity information meets one of the following:
when the network supports only the PLMN or the network supports sharing between the PLMN and the NPN, the target identity information is a 1^{st} piece of PLMN identity information (PLMN-IdentityInfo) that follows a broadcasting sequence in a PLMN identity information list (PLMN-IdentityInfoList) in the SIB 1; and
when the network supports only the NPN, the target identity information is a 1^{st} piece of NPN identity information (NPN-IdentityInfo) that follows a broadcasting sequence in an NPN identity information list (NPN-IdentityInfoList) in the SIB 1.

The method for determining a timing synchronization status change provided in the embodiments of this application may be performed by an apparatus for determining a timing synchronization status change. In the embodiments of this application, that the apparatus for determining a timing synchronization status change performs the method for determining a timing synchronization status change is used as an example to describe the apparatus for determining a timing synchronization status change provided in the embodiments of this application.

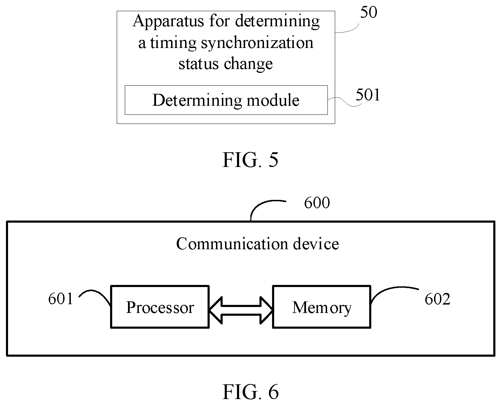

As shown in FIG. 5, an embodiment of this application further provides an apparatus for determining a timing synchronization status change. An apparatus 50 for determining a timing synchronization status change may include the following module:
a determining module 501, configured to: in a case that a first event identifier corresponding to a first event is obtained, determine, based on whether a first stored event identifier corresponding to a second event is stored locally, whether a timing synchronization status of the terminal has changed.

The first event and the second event are related to the timing synchronization status of the terminal.

Optionally, the determining module 501 includes:
a first determining sub-module, configured to: in a case that the first stored event identifier is not stored locally, determine that the timing synchronization status of the terminal has changed; and
a second determining sub-module, configured to: in a case that the first stored event identifier is stored locally, determine, based on the first event identifier and the first stored event identifier, whether the timing synchronization status of the terminal has changed.

Optionally, the second determining sub-module includes:
a first determining unit, configured to: in a case that the first event identifier is different from the first stored event identifier, determine that the timing synchronization status of the terminal has changed; and
a second determining unit, configured to: in a case that the first event identifier is the same as the first stored event identifier, determine, based on identity information of a base station on which the terminal currently camps and identity information of a camped-on base station that is stored locally by the terminal, whether the timing synchronization status of the terminal has changed.

Optionally, the identity information of the base station on which the terminal currently camps includes a first base station identifier, the identity information of the camped-on base station that is stored locally by the terminal includes a first stored base station identifier, and both the first base station identifier and the first stored base station identifier are global base station identifiers.

The second determining unit is specifically configured to:
in a case that the first base station identifier is the same as the first stored base station identifier, determine that the timing synchronization status of the terminal remains unchanged; and
in a case that the first base station identifier is different from the first stored base station identifier, determine that the timing synchronization status of the terminal has changed.

Optionally, the first stored event identifier is stored in a first local variable, and the first stored base station identifier is stored in a second local variable.

The apparatus further includes at least one of the following modules:
a first updating module, configured to: in a case that the first stored event identifier is not stored locally, use the first event identifier as a second stored event identifier, update storage content of the first local variable to the second stored event identifier, use the first base station identifier as a second stored base station identifier, and update storage content of the second local variable to the second stored base station identifier;
a second updating module, configured to: in a case that the first event identifier is different from the first stored event identifier, use the first event identifier as a third stored event identifier, update storage content of the first local variable to the third stored event identifier, use the first base station identifier as a third stored base station identifier, and update storage content of the second local variable to the third stored base station identifier; and
a third updating module, configured to: in a case that the first base station identifier is different from the first stored base station identifier, use the first base station identifier as a fourth stored base station identifier, and update storage content of the second local variable to the fourth stored base station identifier.

Optionally, the identity information of the base station on which the terminal currently camps includes a first local base station identifier and a first network identifier, and the identity information of the camped-on base station that is stored locally by the terminal includes a first stored local base station identifier and a first stored network identifier.

The second determining unit is specifically configured to:
in a case that the first local base station identifier is the same as the first stored local base station identifier, and the first network identifier is the same as the first stored network identifier, determine that the timing synchronization status of the terminal remains unchanged; and
in a case that the first local base station identifier is different from the first stored local base station identifier, or the first network identifier is different from the first stored network identifier, determine that the timing synchronization status of the terminal has changed.

Optionally, the first stored local base station identifier is stored in a third local variable, and the first stored network identifier is stored in a fourth local variable.

The apparatus further includes at least one of the following modules:
a fourth updating module, configured to: in a case that the first stored event identifier is not stored locally, use the first event identifier as a second stored event identifier, update storage content of the first local variable to the second stored event identifier, use the first local base station identifier as a second stored local base station identifier, update storage content of the third local variable to the second stored local base station identifier, use the first network identifier as a second stored network identifier, and update storage content of the fourth local variable to the second stored network identifier;
a fifth updating module, configured to: in a case that the first event identifier is different from the first stored event identifier, use the first event identifier as a third stored event identifier, update storage content of the first local variable to the third stored event identifier, use the first local base station identifier as a third stored local base station identifier, update storage content of the third local variable to the third stored local base station identifier, use the first network identifier as a third stored network identifier, and update storage content of the fourth local variable to the third stored network identifier;
a sixth updating module, configured to: in a case that the first local base station identifier is different from the first stored local base station identifier, use the first local base station identifier as a fourth stored local base station identifier, and update storage content of the third local variable to the fourth stored local base station identifier; and
a seventh updating module, configured to: in a case that the first network identifier is different from the first stored network identifier, use the first network identifier as a fourth stored network identifier, and update storage content of the fourth local variable to the fourth stored network identifier.

Optionally, the identity information of the base station on which the terminal currently camps is determined based on target network identity information, and the target network identity information is determined based on a situation of support, by a network on which the terminal camps, for a public land mobile network PLMN and a non-public network NPN.

Optionally, the target network identity information meets one of the following:
in a case that the network on which the terminal camps supports only the PLMN, the target network identity information includes a first object in a PLMN identity information list in a first system information block SIB 1, and the first object is a 1^{st} piece of PLMN identity information that follows a broadcasting sequence in the PLMN identity information list;
in a case that the network on which the terminal camps supports sharing between the PLMN and the NPN, the target network identity information includes the first object in the PLMN identity information list in the SIB 1; and
in a case that the network on which the terminal camps supports the NPN, the target network identity information includes a second object in an NPN identity information list in the SIB 1, and the second object is a 1^{st} piece of NPN identity information that follows a broadcasting sequence in the NPN identity information list.

Optionally, the identity information of the base station on which the terminal currently camps includes a first base station identifier, and the first base station identifier is determined based on the first network identifier and the first local base station identifier; or the identity information of the base station on which the terminal currently camps includes the first network identifier and the first local base station identifier.

In a case that the network on which the terminal camps supports only the PLMN, the first network identifier is a 1^{st} PLMN identifier in the first object, and the first local base station identifier is determined based on the first object;
in a case that the network on which the terminal camps supports sharing between the PLMN and the non-public network NPN, the first network identifier is a 1^{st} PLMN identifier in the first object, and the first local base station identifier is determined based on the first object; and
in a case that the network on which the terminal camps supports the NPN, the first network identifier is a PLMN identifier included in a 1^{st} NPN identifier in the second object, and the first local base station identifier is determined based on the second object.

Optionally, the apparatus further includes:
a notification module, configured to: in a case that it is determined that the timing synchronization status of the terminal has changed, notify a non-access stratum of the terminal that target information has changed; where
the target information includes at least one of clock quality information and timing synchronization status information.

Optionally, the apparatus further includes:
an obtaining module, configured to obtain the first event identifier from a ninth system information block SIB 9.

The apparatus for determining a timing synchronization status change in this embodiment of this application may be an electronic device, for example, an electronic device having an operating system, or may be a component in the electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The apparatus for determining a timing synchronization status change provided in this embodiment of this application can implement processes implemented in the method embodiments in FIG. 2 to FIG. 4, and achieve same technical effects. To avoid repetition, details are not described herein again.

As shown in FIG. 6, an embodiment of this application further provides a communication device 600, including a processor 601 and a memory 602. The memory 602 stores a program or instructions capable of being run on the processor 601. For example, when the communication device 600 is a terminal, the program or instructions are executed by the processor 601 to implement the steps in the foregoing embodiment of the method for determining a timing synchronization status change, and can achieve same technical effects. To avoid repetition, details are not described herein again.

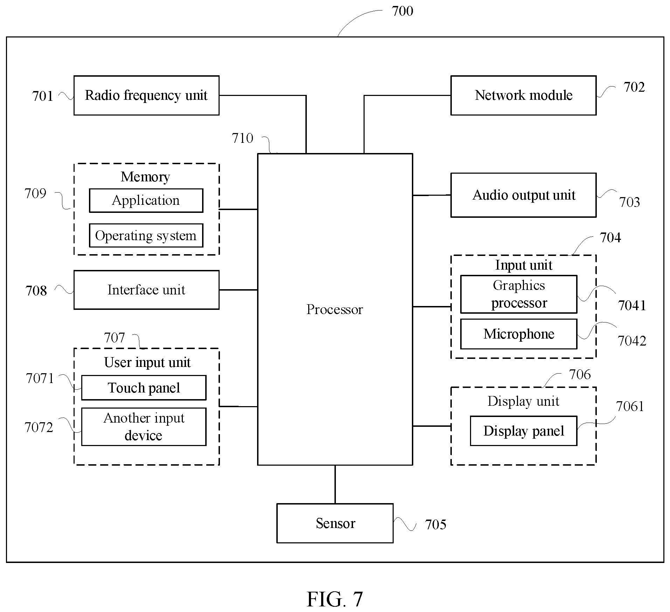

An embodiment of this application further provides a terminal, including a processor and a communication interface. The communication interface is coupled to the processor. The processor is configured to run a program or instructions to implement the steps in the method embodiment shown in FIG. 2. The terminal embodiment corresponds to the foregoing terminal side method embodiment. Each implementation process and implementation of the foregoing method embodiment may be applied to the terminal embodiment, and same technical effects can be achieved. Specifically, FIG. 7 is a schematic diagram of a hardware structure of a terminal for implementing an embodiment of this application.

A terminal 700 includes but is not limited to at least some components in a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) that supplies power to each component. The power supply may be logically connected to the processor 710 through a power management system, to implement functions such as charging management, discharging management, and power consumption management through the power management system. The structure of the terminal shown in FIG. 7 does not constitute a limitation on the terminal. The terminal may include more or fewer components than those shown in the figure, or combine some components, or have different component arrangements. Details are not described herein again.

It should be understood that in this embodiment of this application, the input unit 704 may include a graphics processing unit (Graphics Processing Unit, GPU) 7041 and a microphone 7042. The graphics processing unit 7041 processes image data of a still picture or a video obtained by an image capture apparatus (such as a camera) in a video capture mode or an image capture mode. The display unit 706 may include a display panel 7061, and the display panel 7 061 may be configured in a form of a liquid crystal display, an organic light emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a function key (such as a volume control key or an on/off key), a trackball, a mouse, and a joystick. Details are not described herein again.

In this embodiment of this application, after receiving downlink data from a network side device, the radio frequency unit 701 may transmit the downlink data to the processor 710 for processing. In addition, the radio frequency unit 701 may send uplink data to the network side device. Generally, the radio frequency unit 701 includes but is not limited to an antenna, an amplifier, a transceiver, a coupler, a low-noise amplifier, a duplexer, and the like.

The memory 709 may be configured to store a software program or instructions and various types of data. The memory 709 may mainly include a first stored area for storing a program or instructions and a second stored area for storing data. The first stored area may store an operating system, an application or instructions required by at least one function (for example, a sound playback function or an image playback function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in this embodiment of this application includes but is not limited to these memories and any other suitable type of memory.

The processor 710 may include one or more processing units. Optionally, the processor 710 integrates an application processor and a modem processor. The application processor mainly processes operations related to an operating system, a user interface, an application, and the like. The modem processor, for example, a baseband processor, mainly processes a wireless communication signal. It may be understood that the foregoing modem processor may not be integrated into the processor 710.

The processor 710 is configured to: in a case that a first event identifier corresponding to a first event is obtained, determine, based on whether a first stored event identifier corresponding to a second event is stored locally, whether a timing synchronization status of the terminal has changed.

The first event and the second event are related to the timing synchronization status of the terminal.

Optionally, that the processor 710 determines, based on whether the first stored event identifier corresponding to the second event is stored locally, whether the timing synchronization status of the terminal has changed includes:
in a case that the first stored event identifier is not stored locally, determining that the timing synchronization status of the terminal has changed; and
in a case that the first stored event identifier is stored locally, determining, based on the first event identifier and the first stored event identifier, whether the timing synchronization status of the terminal has changed.

Optionally, that the processor 710 determines, based on the first event identifier and the first stored event identifier, whether the timing synchronization status of the terminal has changed includes:
in a case that the first event identifier is different from the first stored event identifier, determining that the timing synchronization status of the terminal has changed; and
in a case that the first event identifier is the same as the first stored event identifier, determining, based on identity information of a base station on which the terminal currently camps and identity information of a camped-on base station that is stored locally by the terminal, whether the timing synchronization status of the terminal has changed.

Optionally, the identity information of the base station on which the terminal currently camps includes a first base station identifier, the identity information of the camped-on base station that is stored locally by the terminal includes a first stored base station identifier, and both the first base station identifier and the first stored base station identifier are global base station identifiers.

That the processor 710 determines, based on the identity information of the base station on which the terminal currently camps and the identity information of the camped-on base station that is stored locally by the terminal, whether the timing synchronization status of the terminal has changed includes:
in a case that the first base station identifier is the same as the first stored base station identifier, determining that the timing synchronization status of the terminal remains unchanged; and
in a case that the first base station identifier is different from the first stored base station identifier, determining that the timing synchronization status of the terminal has changed.

Optionally, the first stored event identifier is stored in a first local variable, and the first stored base station identifier is stored in a second local variable.

The processor 710 is further configured to perform one of the following:
in a case that the first stored event identifier is not stored locally, using the first event identifier as a second stored event identifier, updating storage content of the first local variable to the second stored event identifier, using the first base station identifier as a second stored base station identifier, and updating storage content of the second local variable to the second stored base station identifier;
in a case that the first event identifier is different from the first stored event identifier, using the first event identifier as a third stored event identifier, updating storage content of the first local variable to the third stored event identifier, using the first base station identifier as a third stored base station identifier, and updating storage content of the second local variable to the third stored base station identifier; or
in a case that the first base station identifier is different from the first stored base station identifier, using the first base station identifier as a fourth stored base station identifier, and updating storage content of the second local variable to the fourth stored base station identifier.

Optionally, the identity information of the base station on which the terminal currently camps includes a first local base station identifier and a first network identifier, and the identity information of the camped-on base station that is stored locally by the terminal includes a first stored local base station identifier and a first stored network identifier.

That the processor 710 determines, based on the identity information of the base station on which the terminal currently camps and the identity information of the camped-on base station that is stored locally by the terminal, whether the timing synchronization status of the terminal has changed includes:
in a case that the first local base station identifier is the same as the first stored local base station identifier, and the first network identifier is the same as the first stored network identifier, determining that the timing synchronization status of the terminal remains unchanged; and
in a case that the first local base station identifier is different from the first stored local base station identifier, or the first network identifier is different from the first stored network identifier, determining that the timing synchronization status of the terminal has changed.

Optionally, the first stored local base station identifier is stored in a third local variable, and the first stored network identifier is stored in a fourth local variable.

The processor 710 is further configured to perform one of the following:
in a case that the first stored event identifier is not stored locally, using the first event identifier as a second stored event identifier, updating storage content of the first local variable to the second stored event identifier, using the first local base station identifier as a second stored local base station identifier, updating storage content of the third local variable to the second stored local base station identifier, using the first network identifier as a second stored network identifier, and updating storage content of the fourth local variable to the second stored network identifier;
in a case that the first event identifier is different from the first stored event identifier, using the first event identifier as a third stored event identifier, updating storage content of the first local variable to the third stored event identifier, using the first local base station identifier as a third stored local base station identifier, updating storage content of the third local variable to the third stored local base station identifier, using the first network identifier as a third stored network identifier, and updating storage content of the fourth local variable to the third stored network identifier;
in a case that the first local base station identifier is different from the first stored local base station identifier, using the first local base station identifier as a fourth stored local base station identifier, and updating storage content of the third local variable to the fourth stored local base station identifier; and
in a case that the first network identifier is different from the first stored network identifier, using the first network identifier as a fourth stored network identifier, and updating storage content of the fourth local variable to the fourth stored network identifier.

Optionally, the identity information of the base station on which the terminal currently camps is determined based on target network identity information, and the target network identity information is determined based on a situation of support, by a network on which the terminal camps, for a public land mobile network PLMN and a non-public network NPN.

Optionally, the target network identity information meets one of the following:
in a case that the network on which the terminal camps supports only the PLMN, the target network identity information includes a first object in a PLMN identity information list in a first system information block SIB 1, and the first object is a 1^{st} piece of PLMN identity information that follows a broadcasting sequence in the PLMN identity information list;
in a case that the network on which the terminal camps supports sharing between the PLMN and the NPN, the target network identity information includes the first object in the PLMN identity information list in the SIB 1; and
in a case that the network on which the terminal camps supports the NPN, the target network identity information includes a second object in an NPN identity information list in the SIB 1, and the second object is a 1^{st} piece of NPN identity information that follows a broadcasting sequence in the NPN identity information list.

Optionally, the identity information of the base station on which the terminal currently camps includes a first base station identifier, and the first base station identifier is determined based on the first network identifier and the first local base station identifier; or the identity information of the base station on which the terminal currently camps includes the first network identifier and the first local base station identifier.

In a case that the network on which the terminal camps supports only the PLMN, the first network identifier is a 1^{st} PLMN identifier in the first object, and the first local base station identifier is determined based on the first object;
in a case that the network on which the terminal camps supports sharing between the PLMN and the non-public network NPN, the first network identifier is a 1^{st} PLMN identifier in the first object, and the first local base station identifier is determined based on the first object; and
in a case that the network on which the terminal camps supports the NPN, the first network identifier is a PLMN identifier included in a 1^{st} NPN identifier in the second object, and the first local base station identifier is determined based on the second object.

Optionally, the processor 710 is further configured to:
in a case that it is determined that the timing synchronization status of the terminal has changed, control an access stratum of the terminal to notify a non-access stratum that target information has changed; where
the target information includes at least one of clock quality information and timing synchronization status information.

Optionally, that the processor 710 obtains the first event identifier includes:
obtaining the first event identifier from a ninth system information block SIB 9.

It may be understood that for implementation processes of the implementations mentioned in this embodiment, reference may be made to related descriptions in the foregoing embodiment of the method for determining a timing synchronization status change, and same or corresponding technical effects are achieved. To avoid repetition, details are not described herein again.

An embodiment of this application further provides a readable storage medium. The readable storage medium stores a program or instructions. The program or instructions are executed by a processor to implement processes in the foregoing embodiment of the method for determining a timing synchronization status change, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement processes in the foregoing embodiment of the method for determining a timing synchronization status change, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement processes in the foregoing embodiment of the method for determining a timing synchronization status change, and same technical effects can be achieved. To avoid repetition, details are not described herein again.

It should be noted that in this specification, the term "include", "comprise", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the methods and apparatuses in the implementations of this application is not limited to performing functions in a sequence shown or discussed, and may further include performing functions in a basically simultaneous manner or in a reverse sequence based on related functions. For example, the described methods may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network side device to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. A method for determining a timing synchronization status change, wherein the method comprises:
in a case that a terminal obtains a first event identifier corresponding to a first event, determining, by the terminal based on whether a first stored event identifier corresponding to a second event is stored locally, whether a timing synchronization status of the terminal has changed; wherein
the first event and the second event are related to the timing synchronization status of the terminal.

2. The method according to claim 1, wherein the determining, by the terminal based on whether a first stored event identifier corresponding to a second event is stored locally, whether a timing synchronization status of the terminal has changed comprises:
in a case that the first stored event identifier is not stored locally, determining, by the terminal, that the timing synchronization status of the terminal has changed; and
in a case that the first stored event identifier is stored locally, determining, by the terminal based on the first event identifier and the first stored event identifier, whether the timing synchronization status of the terminal has changed.

3. The method according to claim 2, wherein the determining, by the terminal based on the first event identifier and the first stored event identifier, whether the timing synchronization status of the terminal has changed comprises:
in a case that the first event identifier is different from the first stored event identifier, determining, by the terminal, that the timing synchronization status of the terminal has changed; and
in a case that the first event identifier is the same as the first stored event identifier, determining, by the terminal based on identity information of a base station on which the terminal currently camps and identity information of a camped-on base station that is stored locally by the terminal, whether the timing synchronization status of the terminal has changed.

4. The method according to claim 3, wherein the identity information of the base station on which the terminal currently camps comprises a first base station identifier, the identity information of the camped-on base station that is stored locally by the terminal comprises a first stored base station identifier, and both the first base station identifier and the first stored base station identifier are global base station identifiers; and
the determining, by the terminal based on identity information of a base station on which the terminal currently camps and identity information of a camped-on base station that is stored locally by the terminal, whether the timing synchronization status of the terminal has changed comprises:
in a case that the first base station identifier is the same as the first stored base station identifier, determining, by the terminal, that the timing synchronization status of the terminal remains unchanged; and
in a case that the first base station identifier is different from the first stored base station identifier, determining, by the terminal, that the timing synchronization status of the terminal has changed.

5. The method according to claim 4, wherein the first stored event identifier is stored in a first local variable, and the first stored base station identifier is stored in a second local variable; and
the method further comprises one of the following:
in a case that the first stored event identifier is not stored locally, using, by the terminal, the first event identifier as a second stored event identifier, updating storage content of the first local variable to the second stored event identifier, using the first base station identifier as a second stored base station identifier, and updating storage content of the second local variable to the second stored base station identifier;
in a case that the first event identifier is different from the first stored event identifier, using, by the terminal, the first event identifier as a third stored event identifier, updating storage content of the first local variable to the third stored event identifier, using the first base station identifier as a third stored base station identifier, and updating storage content of the second local variable to the third stored base station identifier; and
in a case that the first base station identifier is different from the first stored base station identifier, using, by the terminal, the first base station identifier as a fourth stored base station identifier, and updating storage content of the second local variable to the fourth stored base station identifier.

6. The method according to claim 3, wherein the identity information of the base station on which the terminal currently camps comprises a first local base station identifier and a first network identifier, and the identity information of the camped-on base station that is stored locally by the terminal comprises a first stored local base station identifier and a first stored network identifier; and
the determining, by the terminal based on identity information of a base station on which the terminal currently camps and identity information of a camped-on base station that is stored locally by the terminal, whether the timing synchronization status of the terminal has changed comprises:
in a case that the first local base station identifier is the same as the first stored local base station identifier, and the first network identifier is the same as the first stored network identifier, determining, by the terminal, that the timing synchronization status of the terminal remains unchanged; and
in a case that the first local base station identifier is different from the first stored local base station identifier, or the first network identifier is different from the first stored network identifier, determining, by the terminal, that the timing synchronization status of the terminal has changed.

7. The method according to claim 6, wherein the first stored local base station identifier is stored in a third local variable, and the first stored network identifier is stored in a fourth local variable; and
the method further comprises one of the following:
in a case that the first stored event identifier is not stored locally, using, by the terminal, the first event identifier as a second stored event identifier, updating storage content of the first local variable to the second stored event identifier, using the first local base station identifier as a second stored local base station identifier, updating storage content of the third local variable to the second stored local base station identifier, using the first network identifier as a second stored network identifier, and updating storage content of the fourth local variable to the second stored network identifier;
in a case that the first event identifier is different from the first stored event identifier, using, by the terminal, the first event identifier as a third stored event identifier, updating storage content of the first local variable to the third stored event identifier, using the first local base station identifier as a third stored local base station identifier, updating storage content of the third local variable to the third stored local base station identifier, using the first network identifier as a third stored network identifier, and updating storage content of the fourth local variable to the third stored network identifier;
in a case that the first local base station identifier is different from the first stored local base station identifier, using, by the terminal, the first local base station identifier as a fourth stored local base station identifier, and updating storage content of the third local variable to the fourth stored local base station identifier; and
in a case that the first network identifier is different from the first stored network identifier, using, by the terminal, the first network identifier as a fourth stored network identifier, and updating storage content of the fourth local variable to the fourth stored network identifier.

8. The method according to any one of claims 3 to 7, wherein the identity information of the base station on which the terminal currently camps is determined based on target network identity information, and the target network identity information is determined based on a situation of support, by a network on which the terminal camps, for a public land mobile network PLMN and a non-public network NPN.

9. The method according to claim 8, wherein the target network identity information meets one of the following:
in a case that the network on which the terminal camps supports only the PLMN, the target network identity information comprises a first object in a PLMN identity information list in a first system information block SIB 1, and the first object is a 1^{st} piece of PLMN identity information that follows a broadcasting sequence in the PLMN identity information list;
in a case that the network on which the terminal camps supports sharing between the PLMN and the NPN, the target network identity information comprises the first object in the PLMN identity information list in the SIB 1; and
in a case that the network on which the terminal camps supports the NPN, the target network identity information comprises a second object in an NPN identity information list in the SIB 1, and the second object is a 1^{st} piece of NPN identity information that follows a broadcasting sequence in the NPN identity information list.

10. The method according to claim 9, wherein the identity information of the base station on which the terminal currently camps comprises a first base station identifier, and the first base station identifier is determined based on the first network identifier and the first local base station identifier; or the identity information of the base station on which the terminal currently camps comprises the first network identifier and the first local base station identifier; and
the first network identifier and the first local base station identifier meet one of the following:
in a case that the network on which the terminal camps supports only the PLMN, the first network identifier is a 1^{st} PLMN identifier in the first object, and the first local base station identifier is determined based on the first object;
in a case that the network on which the terminal camps supports sharing between the PLMN and the non-public network NPN, the first network identifier is a 1^{st} PLMN identifier in the first object, and the first local base station identifier is determined based on the first object; and
in a case that the network on which the terminal camps supports the NPN, the first network identifier is a PLMN identifier comprised in a 1^{st} NPN identifier in the second object, and the first local base station identifier is determined based on the second object.

11. The method according to any one of claims 2 to 10, wherein the method further comprises:
in a case that it is determined that the timing synchronization status of the terminal has changed, notifying, by an access stratum of the terminal, a non-access stratum that target information has changed; wherein
the target information comprises at least one of clock quality information and timing synchronization status information.

12. The method according to any one of claims 2 to 11, wherein the obtaining, by the terminal, the first event identifier comprises:
obtaining, by the terminal, the first event identifier from a ninth system information block SIB 9.

13. An apparatus for determining a timing synchronization status change, applied to a terminal, wherein the apparatus comprises:
a determining module, configured to: in a case that a first event identifier corresponding to a first event is obtained, determine, based on whether a first stored event identifier corresponding to a second event is stored locally, whether a timing synchronization status of the terminal has changed; wherein
the first event and the second event are related to the timing synchronization status of the terminal.

14. The apparatus according to claim 13, wherein the determining module comprises:
a first determining sub-module, configured to: in a case that the first stored event identifier is not stored locally, determine that the timing synchronization status of the terminal has changed; and
a second determining sub-module, configured to: in a case that the first stored event identifier is stored locally, determine, based on the first event identifier and the first stored event identifier, whether the timing synchronization status of the terminal has changed.

15. The apparatus according to claim 14, wherein the second determining sub-module comprises:
a first determining unit, configured to: in a case that the first event identifier is different from the first stored event identifier, determine that the timing synchronization status of the terminal has changed; and
a second determining unit, configured to: in a case that the first event identifier is the same as the first stored event identifier, determine, based on identity information of a base station on which the terminal currently camps and identity information of a camped-on base station that is stored locally by the terminal, whether the timing synchronization status of the terminal has changed.

16. The apparatus according to claim 15, wherein the identity information of the base station on which the terminal currently camps comprises a first base station identifier, the identity information of the camped-on base station that is stored locally by the terminal comprises a first stored base station identifier, and both the first base station identifier and the first stored base station identifier are global base station identifiers; and
the second determining unit is specifically configured to:
in a case that the first base station identifier is the same as the first stored base station identifier, determine that the timing synchronization status of the terminal remains unchanged; and
in a case that the first base station identifier is different from the first stored base station identifier, determine that the timing synchronization status of the terminal has changed.

17. The apparatus according to claim 16, wherein the first stored event identifier is stored in a first local variable, and the first stored base station identifier is stored in a second local variable; and
the apparatus further comprises at least one of the following modules:
a first updating module, configured to: in a case that the first stored event identifier is not stored locally, use the first event identifier as a second stored event identifier, update storage content of the first local variable to the second stored event identifier, use the first base station identifier as a second stored base station identifier, and update storage content of the second local variable to the second stored base station identifier;
a second updating module, configured to: in a case that the first event identifier is different from the first stored event identifier, use the first event identifier as a third stored event identifier, update storage content of the first local variable to the third stored event identifier, use the first base station identifier as a third stored base station identifier, and update storage content of the second local variable to the third stored base station identifier; and
a third updating module, configured to: in a case that the first base station identifier is different from the first stored base station identifier, use the first base station identifier as a fourth stored base station identifier, and update storage content of the second local variable to the fourth stored base station identifier.

18. The apparatus according to claim 15, wherein the identity information of the base station on which the terminal currently camps comprises a first local base station identifier and a first network identifier, and the identity information of the camped-on base station that is stored locally by the terminal comprises a first stored local base station identifier and a first stored network identifier; and
the second determining unit is specifically configured to:
in a case that the first local base station identifier is the same as the first stored local base station identifier, and the first network identifier is the same as the first stored network identifier, determine that the timing synchronization status of the terminal remains unchanged; and
in a case that the first local base station identifier is different from the first stored local base station identifier, or the first network identifier is different from the first stored network identifier, determine that the timing synchronization status of the terminal has changed.

19. The apparatus according to claim 18, wherein the first stored local base station identifier is stored in a third local variable, and the first stored network identifier is stored in a fourth local variable; and
the apparatus further comprises at least one of the following modules:
a fourth updating module, configured to: in a case that the first stored event identifier is not stored locally, use the first event identifier as a second stored event identifier, update storage content of the first local variable to the second stored event identifier, use the first local base station identifier as a second stored local base station identifier, update storage content of the third local variable to the second stored local base station identifier, use the first network identifier as a second stored network identifier, and update storage content of the fourth local variable to the second stored network identifier;
a fifth updating module, configured to: in a case that the first event identifier is different from the first stored event identifier, use the first event identifier as a third stored event identifier, update storage content of the first local variable to the third stored event identifier, use the first local base station identifier as a third stored local base station identifier, update storage content of the third local variable to the third stored local base station identifier, use the first network identifier as a third stored network identifier, and update storage content of the fourth local variable to the third stored network identifier;
a sixth updating module, configured to: in a case that the first local base station identifier is different from the first stored local base station identifier, use the first local base station identifier as a fourth stored local base station identifier, and update storage content of the third local variable to the fourth stored local base station identifier; and
a seventh updating module, configured to: in a case that the first network identifier is different from the first stored network identifier, use the first network identifier as a fourth stored network identifier, and update storage content of the fourth local variable to the fourth stored network identifier.

20. The apparatus according to any one of claims 15 to 19, wherein the identity information of the base station on which the terminal currently camps is determined based on target network identity information, and the target network identity information is determined based on a situation of support, by a network on which the terminal camps, for a public land mobile network PLMN and a non-public network NPN.

21. The apparatus according to claim 20, wherein the target network identity information meets one of the following:
in a case that the network on which the terminal camps supports only the PLMN, the target network identity information comprises a first object in a PLMN identity information list in a first system information block SIB 1, and the first object is a 1^{st} piece of PLMN identity information that follows a broadcasting sequence in the PLMN identity information list;
in a case that the network on which the terminal camps supports sharing between the PLMN and the NPN, the target network identity information comprises the first object in the PLMN identity information list in the SIB 1; and
in a case that the network on which the terminal camps supports the NPN, the target network identity information comprises a second object in an NPN identity information list in the SIB 1, and the second object is a 1^{st} piece of NPN identity information that follows a broadcasting sequence in the NPN identity information list.

22. The apparatus according to claim 21, wherein the identity information of the base station on which the terminal currently camps comprises a first base station identifier, and the first base station identifier is determined based on the first network identifier and the first local base station identifier; or the identity information of the base station on which the terminal currently camps comprises the first network identifier and the first local base station identifier;
in a case that the network on which the terminal camps supports only the PLMN, the first network identifier is a 1^{st} PLMN identifier in the first object, and the first local base station identifier is determined based on the first object;
in a case that the network on which the terminal camps supports sharing between the PLMN and the non-public network NPN, the first network identifier is a 1^{st} PLMN identifier in the first object, and the first local base station identifier is determined based on the first object; and
in a case that the network on which the terminal camps supports the NPN, the first network identifier is a PLMN identifier comprised in a 1^{st} NPN identifier in the second object, and the first local base station identifier is determined based on the second object.

23. The apparatus according to any one of claims 14 to 22, wherein the apparatus further comprises:
a notification module, configured to: in a case that it is determined that the timing synchronization status of the terminal has changed, notify a non-access stratum of the terminal that target information has changed; wherein
the target information comprises at least one of clock quality information and timing synchronization status information.

24. A terminal, comprising a processor and a memory, wherein the memory stores a program or instruction capable of being run on the processor, and when the program or instructions are executed by the processor, the steps of the method for determining a timing synchronization status change according to any one of claims 1 to 12 are implemented.

25. A readable storage medium, wherein a program or instructions are stored in the readable storage medium, and when the program or instructions are executed by a processor, the steps of the method for determining a timing synchronization status change according to any one of claims 1 to 12 are implemented.

26. A chip, wherein the chip comprises a processor and a communication interface, the communication interface is coupled to the processor, and the processor is configured to run a program or instructions to implement the steps of the method for determining a timing synchronization status change according to any one of claims 1 to 12.
